# EUROPEAN PATENT APPLICATION

(11) **EP 2 216 751 A2**
(43) Date of publication of application: **11.08.2010**
(21) Application number: 10150254.0
(22) Date of filing: 07.01.2010
(51) Int. Cl.: G06T 15/00

(54) **Preventing thoracic bones from being displayed in 3D images**

(30) Priority: 09.01.2009 JP 2009003241
(71) Applicant: FUJIFILM Corporation, Minato-ku Tokyo (JP)
(72) Inventor: Moriya, Yoshiyuki, Ashigarakami-gun Kanagawa (JP)
(74) Representative: Klunker . Schmitt-Nilson . Hirsch

(57) **Abstract**

[Objective]

To prevent thoracic bones of a subject from being displayed in an overlapping manner in the front to back direction of a projection direction, in generation of pseudo three dimensional medical images.

[Constitution]

An image processing apparatus (10) includes: an image obtaining section (1) for obtaining medical images (axial images), which are imaged in advance, that represent transverse cross sections of a subject; a center line calculating section (2), for calculating a center line that connects the centers of subject regions within the medical images; a pseudo three dimensional medical image generating section (3), for generating a planar exploded pseudo three dimensional medical image, by executing an intensity projection method on image data constituted by at least a plurality of the subj ect regions from the center line radially outward toward the surface of the subject's body such that thoracic bones in the front to back direction of the projection direction of the subject are not displayed in an overlapping manner; and a display section (6), for displaying at least one of the pseudo three dimensional medial image and the plurality of medical images.

## Description

### BACKGROUND OF THE INVENTION

### Field of the Invention

The present invention is related to an image processing method for generating pseudo three dimensional medical images. Particularly, the present invention is related to an image processing apparatus, an image processing method, and a computer readable medium, on which an image processing program for generating pseudo three dimensional medical images from a plurality of medical images by executing an intensity projection method is recorded.

### Description of the Related Art

In the medical field, pseudo three dimensional medical images are generated by executing IP (Intensity Projection) methods that enable three dimensional medical images to be formed with respect to a plurality of medical images.

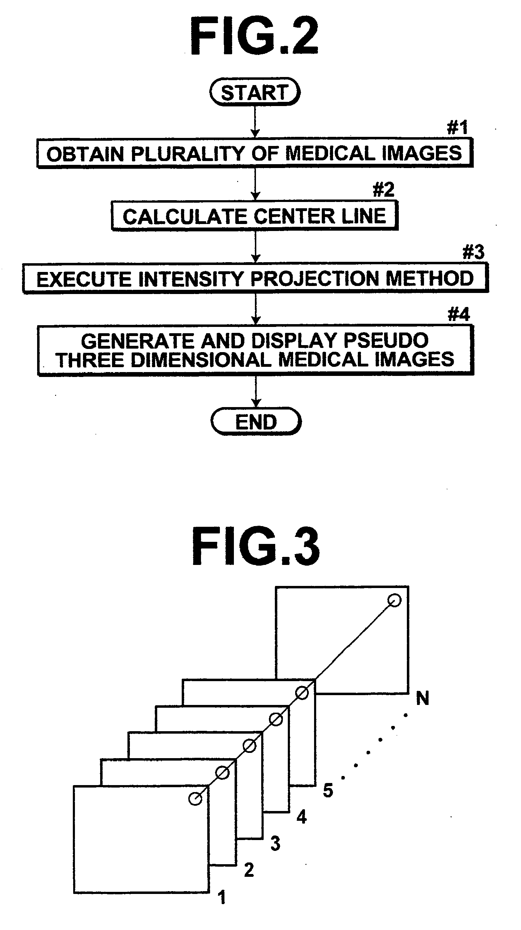

The IP methods are processes by which pixels having the maximum values (alternatively, minimum values or specified values) from among corresponding pixels within all original medical images, which are the targets of processing, are taken out and projected to obtain pseudo three dimensional medical images. That is, in the example illustrated in Figure 3, a pixel having the maximum value (alternatively, the minimum value or a specified value) from among corresponding pixels within the first through N^{th} original medical images, which have been obtained in the depth direction, is taken out for all pixels, to enable obtainment of a pseudo three dimensional medical image.

An MIP (Maximum Intensity Projection) method that takes out pixels having the maximum values from among corresponding pixels within a plurality of medical images is an example of an IP method. However, because the density values of bone regions represented in medical images is high, there is a tendency for the bone regions to become particularly emphasized in pseudo three dimensional medical images which are generated by the MIP method, which cause difficulties for radiologists in performing diagnosis.

A technique that deletes bone regions as a preliminary process to be performed prior to such an intensity projection method is proposed in Japanese Unexamined Patent Publication No. 7(1995)-021351.

However, in this known image processing apparatus (refer to Japanese Unexamined Patent Publication No. 7(1995)-021351) that employs the intensity projection method, the bone regions are deleted. Therefore, there is a problem that the bone regions cannot be diagnosed.

In addition, it is common to perform image diagnosis of thoracic bones employing medical images (axial images). However, because the thoracic bones (particularly the ribs, the breastbone, and the thoracic vertebrae) are present separated from each other and close to the surface of the bodies of subjects, it is difficult for radiologists to diagnose bone regions that require careful viewing. Further, there is a problem that it is difficult to understand which ribs or thoracic vertebrae are pictured in medical images.

If the MIP method is employed to project subject regions represented by medical images, because the density values of bone regions represented in medical images is high, there is a tendency for the bone regions to become particularly emphasized. In addition, the thoracic bones in the front to back direction of the projection direction are displayed in an overlapping manner, which results in images which are difficult to use for diagnosis being generated.

### SUMMARY OF THE INVENTION

The present invention has been developed in view of the foregoing circumstances. It is an object of the present invention to provide an image processing apparatus, an image processing method, and an image processing program, which are capable of generating pseudo three dimensional medical images that facilitate diagnosis of bone regions from a plurality of medical images.

An image processing apparatus of the present invention is an image processing apparatus for displaying a pseudo three dimensional medical image, which is generated by executing an intensity projection method based on a plurality of medical images, which are obtained in advance, that represent transverse cross sections of a subject and include the surface of the body of the subject, characterized by comprising:
a center line calculating section, for calculating a center line that connects the approximate center points of subject regions within the plurality of medical images;
a pseudo three dimensional medical image generating section, for generating a planar exploded pseudo three dimensional medical image by executing an intensity projection method in a radial manner from the center line toward the surface of the subject's body; and
a display section for displaying the generated pseudo three dimensional medical image.

Here, the "approximate center points" refer to pixels which are present at the approximate centers of the subject regions, and are not necessarily the absolute centers of the subject regions. Examples of the "approximate center points" include: points which are equidistant from the peripheries of the subject regions; points which are equidistant from predetermined edges of the subject regions; points at the centers of gravity; points at the centers of the medical images; and approximate center points within the body surface regions, which are automatically detected.

The "pseudo three dimensional medical image generating section" generates the pseudo three dimensional medical image, by executing an intensity projection method based on the plurality of medical images that represent the plurality of transverse cross sections of the subject that include the surface of the subject's body, which are obtained in advance.

Note that the "pseudo three dimensional medical image generating section" may execute the intensity projection method by employing the MIP method.

Alternatively, the "pseudo three dimensional medical image generating section" may execute the intensity projection method by employing the RAYSUM method.

The "display section" displays at least one of the medical images from among the plurality of medical images, and the pseudo three dimensional medical image generated by the pseudo three dimensional medical image generating section.

Note that the "display section" may display an image that indicates the region which is being projected by the intensity projection method and the projection direction of the intensity projection method, along with the medical images.

The image processing apparatus of the present invention may further comprise:
a specific region specifying section, for specifying a specific region from points within the subject regions that intersect the center line. In this case, the pseudo three dimensional medical image generating section may execute the intensity projection method only with respect to the specific region.

The "specific region" refers to specific regions which are specified in each of the plurality of subject regions.

The "specific region" may be a region in which the thoracic bones of the subject are not pictured.

The image processing apparatus of the present invention may further comprise:
a desired region specifying section, for specifying desired regions within the subject regions. In this case, the pseudo three dimensional medical image generating section may execute the intensity projection method only with respect to the desired regions.

The image processing apparatus of the present invention may further comprise:
an input section, for inputting specified points within the medical images; and
a calculating section, for calculating points within the pseudo three dimensional medical image corresponding to the specified points input by the input section within the medical images. In this case, the display section may display the medical images, the pseudo three dimensional medical image, and markers that indicate the calculated corresponding points within the pseudo three dimensional medical image along with the pseudo three dimensional medical image.

The image processing apparatus of the present invention may further comprise:
an input section, for inputting specified points within the displayed pseudo three dimensional medical images; and
a calculating section, for calculating points within the medical images corresponding to the specified points input by the input section within the pseudo three dimensional medical image. In this case, the display section may display the medical images, the pseudo three dimensional medical image, and markers that indicate the corresponding points within the medical images along with the medical images.

An image processing method of the present invention is an image processing method for displaying a pseudo three dimensional medical image, which is generated by executing an intensity projection method based on a plurality of medical images, which are obtained in advance, that represent transverse cross sections of a subject and include the surface of the body of the subject, characterized by comprising the steps of:
calculating a center line that connects the approximate center points of subject regions within the plurality of medical images;
generating a planar exploded pseudo three dimensional medical image by executing an intensity projection method in a radial manner from the center line toward the surface of the subject's body; and
displaying the generated pseudo three dimensional medical image.

An image processing program of the present invention is an image processing program for displaying a pseudo three dimensional medical image, which is generated by executing an intensity projection method based on a plurality of medical images, which are obtained in advance, that represent transverse cross sections of a subject and include the surface of the body of the subject, characterized by causing a computer to execute the procedures of:
calculating a center line that connects the approximate center points of subject regions within the plurality of medical images;
generating a planar exploded pseudo three dimensional medical image by executing an intensity projection method in a radial manner from the center line toward the surface of the subject's body; and
displaying the generated pseudo three dimensional medical image.

In the image processing apparatus, the image processing method, and the image processing program of the present invention, a planar exploded pseudo three dimensional medical image is generated by executing an intensity projection method in a radial manner from the center line toward the surface of the subject's body, and the generated pseudo three dimensional medical image is displayed. Therefore, a pseudo three dimensional medical images that facilitates diagnosis of bone regions, while enabling the position of the bone region within the subject as a whole to be understood, can be generated and displayed.

A configuration may be adopted, wherein specified points are input within medical images which are displayed, the positions of corresponding points within pseudo three dimensional medical images that correspond to the specified points within the medical images are calculated, and markers that indicate the calculated corresponding points are displayed along with the pseudo three dimensional medical images. In this case, positions within the pseudo three dimensional medical images that correspond to the specified points within the medical images can be easily understood. Particularly, which bone within a pseudo three dimensional medical image corresponds to a bone specified by a specified point within a medical image can be easily understood.

Further, a configuration may be adopted, wherein specified points are input within pseudo three dimensional medical images which are displayed, the positions of corresponding points within medical images that correspond to the specified points within the medical images are calculated, and markers that indicate the calculated corresponding points are displayed along with the medical images. In this case, positions within the medical images that correspond to the specified points within the pseudo three dimensional medical images can be easily understood. Particularly, the position within a medical image that a diseased portion specified by a specified point within a pseudo three dimensional medical image is present at can be easily understood.

### BRIEF DESCRIPTION OF THE DRAWINGS

Figure 1 is a block diagram that illustrates the schematic configuration of an image processing apparatus according to a preferred embodiment of the present invention.
Figure 2 is a flow chart that illustrates the steps of a process for generating pseudo three dimensional medical images executed by the preferred embodiment of the present invention.
Figure 3 is a diagram for explaining the process of intensity projection methods.
Figure 4 is a diagram for explaining the range of a first target region for intensity projection executed by the embodiment of the present invention.
Figure 5 is a diagram for explaining the range of a second target region for intensity projection executed by the embodiment of the present invention.
Figure 6 is a diagram that illustrates an example of an image which is displayed by a display section of the embodiment of the present invention.

### DESCRIPTION OF THE PREFERRED EMBODIMENTS

Hereinafter, an embodiment of the present invention will be described with reference to the attached drawings.

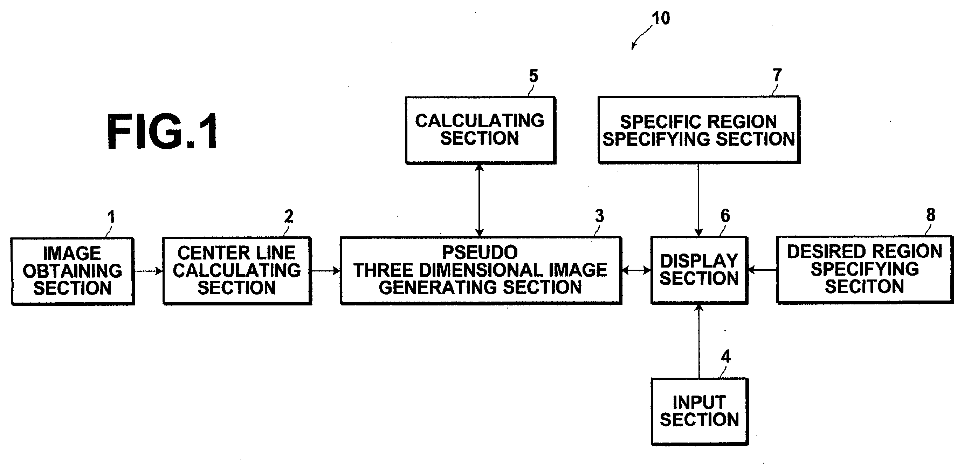

An image processing apparatus 10 illustrated in Figure 1 is equipped with: an image obtaining section 1, for obtaining a plurality of medical images (axial) that represent transverse sections of a subject and include the surface of the body of the subject, which have been imaged in advance; a center line calculating section 2, for calculating a center line that connects the approximate centers of subject regions pictured in the plurality of medical images; a pseudo three dimensional medical image generating section 3, for generating a planar exploded pseudo three dimensional medical image by executing an intensity projection method in a radial manner from the center line toward the surface of the subject's body; a display section 6, for displaying the generated pseudo three dimensional medical image and/or at least one of the plurality of medical images; an input section 4, for inputting specified points within the medical images or the pseudo three dimensional medical image; a calculating section 5, to be described later; a specific region specifying section 7, to be described later; and a desired region specifying section 8, to be described later.

The image obtaining section 1 obtains a plurality of medical images by reading out a recording medium in which the plurality of medical images (CT images and MRI images, for example) are recorded. Alternatively, the image obtaining section 1 obtains a plurality of medical images from a CT (Computed Tomography) apparatus or an MRI (Magnetic Resonance Imaging) apparatus via a communication network. As a further alternative, the image obtaining section 1 itself may be a CT apparatus or an MRI apparatus.

The center line calculating section 2 calculates a center line that connects the approximate center points of subject regions within the plurality of medical images.

The approximate center points refer to pixels which are present at the approximate centers of the subject regions, and are not necessarily the absolute centers of the subject regions. Examples of the "approximate center points" include: points which are equidistant from the peripheries of the subject regions; points which are equidistant from predetermined edges of the subject regions; points at the centers of gravity; points at the centers of the medical images; and approximate center points within the body surface regions, which are automatically detected by a method to be described later.

The center line calculating section 2 calculates the center line as a preliminary process, prior to the pseudo three dimensional medical image generating section 3 executing an intensity projection method in a radial manner from the center line toward the surface of the subject's body to generate a planar exploded pseudo three dimensional medical image. For this reason, in view of the fact that thoracic bones are arranged toward the interiors of the surfaces of bodies in a cylindrical shape, the center line calculating section 2 employs an approximate center point (alternatively, the center point) of the subject region·within a medical image from among the plurality of medical images (axial images) as a reference, and sets a line that passes through the approximate center point and is perpendicular (alternatively, approximately perpendicular) to all of the medical images.

The center line calculating section 2 may detect body surface regions of the subject represented by medical images among the plurality of medical images (axial images) by a method to be described later. Then, the approximate center points (alternatively, the center points) of the body surface regions may be calculated. Next, the X coordinates and Y coordinates (coordinates along the horizontal and vertical axes of the axial images) of each of the calculated center points may be averaged, and the center line may be set as a line that passes through the averaged coordinate point and is perpendicular (alternatively, approximately perpendicular) to all of the medical images. In this case, the point at the average coordinate values is designated as the approximate center point.

Alternatively, the center line calculating section 2 may detect body surface regions of the subject represented by medical images among the plurality of medical images (axial images) by a method to be described later. Then, the approximate center points (alternatively, the center points) of the body surface regions may be calculated. Thereafter, a line obtained by the minimum squares method from the calculated center points may be set as the center line. In this case, the points at which the line obtained by the minimum squares method intersects with the medical images are the approximate center points.

The center line calculating section 2 may set the center line using the center point of the medical image as a whole as a reference, instead of the center point of the subject within the medical image.

The center line calculating section 2 may set the center line using the center point of the outline of the ribs of the subject within the medical image as a reference, instead of the center point of the subject within the medical image.

The center line calculating section 2 may detect the body surface regions by employing the technique disclosed in U.S. Patent Application Publication No. 20080267481. The center line calculating section 2 may designate-the classified subject regions as the body surface regions.

Alternatively, the center line calculating section 2 may detect the surface of the subject's body by the following method. Specifically, pixels are within the medical images are classified into high density pixels having image densities greater than or equal to a predetermined reference density value and low density pixels having image densities less than the reference density value. Next, boundary lines of the high density image regions are extracted, and the two dimensional high density image regions are labeled with numbers to discriminate the high density image regions. Then, connections among two dimensional high density images in the direction of the Z axis are analyzed, and series of high density image groups which are connected in the direction of the Z axis are extracted. Thereafter, a list of line shapes is tracked, a sum of the areas and a sum of the peripheral lengths of high density image regions included in pluralities of linked label data are calculated, and the volumes of three dimensional medical image regions formed by the outlines of the series of high density image groups are estimated. Next, the label data of each high density image that constitutes a high density image group which is determined to be a candidate for the surface of the subject's body is analyzed in order from smaller slice numbers, and a first changing point where the area of the high density image region decreases drastically and the peripheral length of the high density image region increases drastically between pieces of label data having consecutive slice numbers is searched for. When a hole filling process is completed, the position of the surface of the subject's body is ultimately determined. Thereafter, the center line calculating section 2 may designate the classified subject regions as the body surface regions.

Alternatively, the center line calculating section 2 may employ the technique disclosed in Japanese Patent Application No. 2007-256290, for example. In this technique, a binarizing process is administered on each of the plurality of medical images, using a predetermined image density value as a reference. Then, one of two types of image regions, which have been divided by the binarizing process, within a medical image is classified as one of the subject region that represents the interior of the surface of the subject's body and the non subject region that represents the exterior of the surface of the subject's body, based on the positional relationship with an image region of the other type within the medical image, and based on the positional relationship with image regions of the other type which have been extracted from other medical images. Thereafter, the center line calculating section 2 may designate the classified subject regions as the body surface regions.

The center line calculating section 2 may binarize each of the plurality of medical images with the predetermined image density value as a reference. Each image pictured within the binarized medical images is classified as either belonging to a first image group that includes images of the interior of the subject's body and a second image group that includes images of the exterior of the subject' s body, based on the positional relationship of the image with other images within the same medical image, and based on the positional relationship with other images within other medical images. In this manner, each image within the medical images is classified taking the three dimensional shape of the image group that it belongs to into consideration, in addition to the two dimensional shape thereof. Therefore, images of lungs, which have low image densities, can be accurately classified as images within the subject's body, based on the positional relationships thereof with other images. Thereafter, the center line calculating section 2 may designate the classified subject regions as the body surface regions.

It is preferable for the center line calculating section 2 to classify series of images which are connected among a plurality of medical images in the same image groups. The center line calculating section 2 classifies image regions which are separated at a given cross section but are connected three dimensionally into the same image group. Therefore, a problem that a portion of the subject which is pictured separately in certain medical images become erased can be reduced.

It is preferable for the center line calculating section 2 to classify images surrounded by another image in the same image group as the other image. Thereafter, the center line calculating section 2 may designate the classified subject regions as the body surface regions.

The center line calculating section 2 is capable of accurately classifying image regions which are within the body of the subject and have low image densities, such as lung field regions, as images within the subject's body. It is preferable for the center line calculating section 2 to reclassify image regions from among image regions classified into a second image group, which are present within a medical image between image regions classified into a first image group and are sandwiched between image groups classified into the first image group in a predetermined direction, into the first image group. Thereafter, the center line calculating section 2 may designate the classified subject regions as the body surface regions.

Alternatively, the region classifying section may administer a binarizing process on each of the plurality of medical images, using a predetermined image density value as a reference, and classify image regions within the medical images, which have been divided by the binarizing process, other than image regions at the edges of a medical image and image regions that connect with the image regions at the edges of the medical image to form a collective region as the subject regions, and classify the collective image region as the non subject region, by the two dimensional labeling.

The pseudo three dimensional medical image generating section 3 generates pseudo three dimensional medical image by executing an intensity projection method in a radial manner outward from the center line calculated by the center line calculating section 2 toward the surface of the subject's body, to generate a planar exploded pseudo three dimensional medical image.

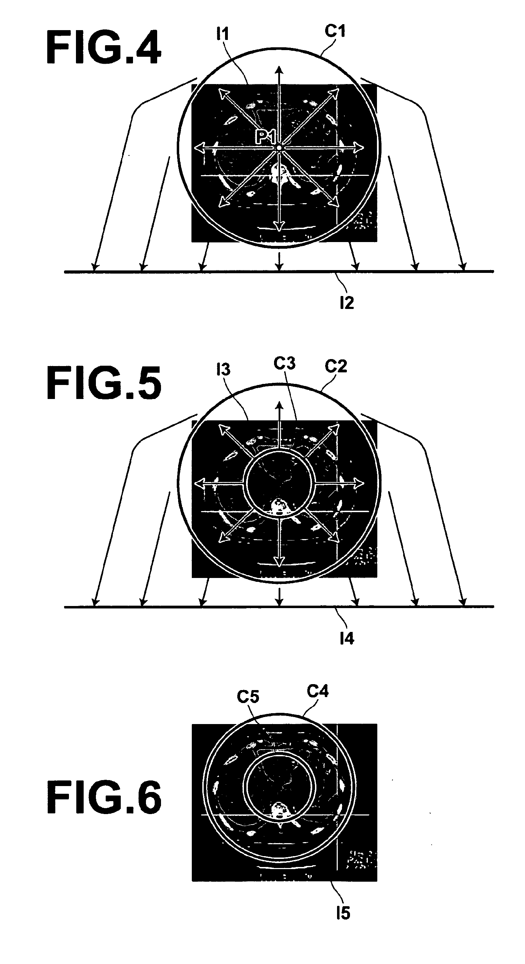

For example, the pseudo three dimensional medical image generating section 3 executes an intensity projection method in a radial manner outward from the center line calculated by the center line calculating section 2 toward the surface of the subject' s body. Figure 4 is a diagram that illustrates this method two dimensionally. By executing an intensity projection method in a radial manner outward from a center line that passes through an approximate center point P1 within a medical image I1 in directions toward the surface of the subject's body, an exploded pseudo three dimensional medical image I2, of which the vertical axis represents the circumferential angle about the central axis and the horizontal axis represents the longitudinal direction of the center line, is generated.

Examples of the intensity projection method to be employed include: the MIP method; and the RAYSUM (Ray Summation) method.

The image processing apparatus 10 is also equipped with the specific region specifying section 7, for specifying a specific region from points within the subject regions that intersect the center line. The pseudo three dimensional medical image generating section 3 executes the intensity projection method only with respect to the specific region.

The specific region specifying section 7 receives input of a circle C1 illustrated in Figure 4 or circles C2 and C3 illustrated in Figure 5, for example. In this case, the closed region within the circle C1 and the region between the outer circle C2 and the inner circle C3 may be specified as the specific region.

For example, by specifying the region between the outer circle C2 and the inner circle C3 as the specific region as illustrated in Figure 5, and by executing an intensity projection method in a radial manner outward from a center line that passes through an approximate center point within a medical image I3 in directions toward the surface of the subject's body, an exploded pseudo three dimensional medical image I4, of which the vertical axis represents the circumferential angle about the central axis and the horizontal axis represents the longitudinal direction of the center line, is generated.

The image processing apparatus 10 is further equipped with the desired region specifying section 8, for specifying a desired region within each of the subject regions. The pseudo three dimensional medical image generating section 3 executes the intensity projection method only with respect to the desired region.

The desired region specifying section 8 enables specification of desired regions by closed curves instead of circles. In addition, The desired region specifying section 8 enables specification of regions between an inner closed curve and an outer closed curve as desired regions. In this case, the center from which the intensity projection method is executed is the approximate center of the inner closed curve.

By specifying a region between an inner closed curve and an outer closed curve as a desired region in this manner, it becomes possible to remove (not include in the desired region) bone regions such as shoulder blades when executing the intensity projection method. In addition, by removing (not including in the desired region) calcified bone regions in the vicinity of the center of the subject region, generation of pseudo three dimensional medical images having these bone regions emphasized therein can be prevented.

Alternatively, the desired region specifying section 8 enables specification of the desired region by setting a mask region having a specific shape.

In the case that the subject regions represented by medical images are projected as they are by the MIP method, the bone regions are particularly emphasized, due to the density values thereof within the medical images being high. Accordingly, pseudo three dimensional medical images, in which defects behind bone regions are not expressed, are generated.

On the other hand, in the case that the subject regions represented by medical images are projected as they are by the RAYSUM method, pseudo three dimensional medical images, in which defects behind bone regions are expressed, are generated. However, the density value of the pseudo three dimensional medical image as a whole is low. The RAYSUM method is an intensity projection method that generates pseudo three dimensional medical images in which it is difficult to discriminate bone regions and the like from other organs.

For this reason, if the pseudo three dimensional medical image generating section 3 employs the RAYSUM method after the desired region is specified, a pseudo three dimensional medical image having favorable discriminative properties can be generated.

The pseudo three dimensional medical image generating section 3 may easily display medical images along a cross sectional direction different from the cross sectional direction of a medical image included in a coronal image, at a position specified within the coronal image, by employing the method disclosed in Japanese Unexamined Patent Publication No. 2008-093254, such that the positions and shapes of diseased portions can be understood accurately. In addition, thoracic bones can be discriminated, and each of the discriminated thoracic bones can be labeled. Further, the projection direction is not limited to directions from the exterior of the surface of the body of the subject, and may be a direction from the interior of the body of the subject toward the exterior.

The pseudo three dimensional medical image generating section 3 may also be capable of extracting image regions appearing in the medical images that represent objects other than the subject having high brightness, such as beds, and deleting the extracted image regions.

The pseudo three dimensional medical image generating section 3 may also be capable of changing the projection direction of the intensity projection method, based on the position of a specified point input by the input section 4, to be described later.

The display section 6 is a monitor, a CRT screen, a liquid crystal display or the like for displaying the medical images (axial images) or the pseudo three dimensional medical images (coronal images).

The image processing apparatus 10 is equipped with the input section 4, for inputting specified points within the medical images which are displayed by the display section 6; and the calculating section 5, for calculating points within the pseudo three dimensional medical image corresponding to the specified points input within the medical images. The display section 6 displays markers that indicate the corresponding points within the pseudo three dimensional medical image, along with the pseudo three dimensional medical image.

The image processing apparatus 10 is also equipped with the input section 4, for inputting specified points within the pseudo three dimensional medical image which is displayed by the display section 6; and a calculating section 5, for calculating points within the medical images corresponding to the specified points input within the pseudo three dimensional medical image. The display section 6 may display markers that indicate the corresponding points within the medical images, along with the medical images. At this time, the display section 6 may also display a pseudo three dimensional medical image that includes a position corresponding to the specified point input by the input section 4.

Note that the image processing apparatus 10 is realized by executing an image processing program, which is recorded in an auxiliary memory device, on a computer (a personal computer, for example).

The image processing program may be recorded on data recording media such as CD-ROM's, or distributed via networks such as the Internet, and then installed in the computer.

The input section 4, the desired region specifying section 8, and the specific region specifying section 7 are input means, such as a mouse and keyboard.

A user performs input with respect to a screen of the display section 6 via the input section 4, the desired region specifying section 8, and the specific region specifying section 7 constituted by the mouse or the keyboard.

Figure 2 is a flow chart that illustrates the steps of a procedure for generating a pseudo three dimensional medical image.

First, the image obtaining section 1 obtains a plurality of typical CT images, which are medical images (axial images) that represent slices of a subject from the subject's chest to the subject's legs (step #1).

The center line calculating section 2 calculates a center line that connects the approximate center points of the subject regions represented in the plurality of CT images obtained by the image obtaining section 1, by one of the methods described above (step #2). Then, the pseudo three dimensional medical image generating section 3 executes an intensity projection method radially outward from the center line calculated by the center line calculating section 2 toward the surface of the subject's body, to generate a planar exploded pseudo three dimensional medical image, in which thoracic bones of the subject are not displayed in an overlapping manner (step #3). Note that the RAYSUM method may be employed instead of the MIP method.

The display section 6 displays the coronal image generated by the pseudo three dimensional medical image generating section 3 (step #4).

Next, display of a pseudo three dimensional medical image (coronal image) along with medical images (CT images) will be described as an embodiment of operation of the display section 6.

For example, the display section 6 displays a pseudo three dimensional medical image (coronal image) together with a medical image (CT image). Then, when the input section 4 receives input of a specified point, which is specified within the medical image (CT image) displayed by the display section 6, the calculating section 5 selects a coronal image that includes the specified point, from the XY coordinates thereof. The calculating section 5 determines the height position (a Z coordinate that indicates the height position from the subject's legs) of the specified point within the medical image (CT image). The display section 6 displays a label (a mark or a point, for example) that indicates a corresponding point at a position that corresponds to the Z coordinate and the XY coordinates of the specified point along with the selected coronal image, and does not display the coronal image which was not selected. Note that the method disclosed in Japanese Unexamined Patent Publication No. 2002-006044 with regard to PET images may be applied to display the coronal image with the CT images.

By adopting this configuration, wherein specified points are input within medical images which are displayed, the positions of corresponding points within pseudo three dimensional medical images that correspond to the specified points·within the medical images are calculated, and markers that indicate the calculated corresponding points are displayed along with the pseudo three dimensional medical images, positions within the pseudo three dimensional medical images that correspond to the specified points within the medical images can be easily understood. Particularly, which bone within a pseudo three dimensional medical image corresponds to a bone specified by a specified point within a medical image can be easily understood.

Further, a configuration may be adopted, wherein a user may specify points within a pseudo three dimensional medical image (coronal image) which is displayed by the display section 6, markers that indicate the specified points are displayed, and calculated corresponding points are displayed along with the CT image by the display section 6.

By adopting this configuration, wherein specified points are input within pseudo three dimensional medical images (coronal images) which are displayed, the positions of corresponding points within medical images that correspond to the specified points within the medical images are calculated, and markers that indicate the calculated corresponding points are displayed along with the medical images by the display section 6, positions within the medical images that correspond to the specified points within the pseudo three dimensional medical images can be easily understood. Particularly, the position within a medical image that a diseased portion specified by a specified point within a pseudo three dimensional medical image is present at can be easily understood.

In the case that a plurality of pseudo three dimensional medical images are displayed by the display section 6, the pseudo three dimensional medical image generating section 3 generates data in which the coronal images are rotated, by receiving input of rotation commands via the input section. Thereafter, the display section 6 may be capable of displaying rotation of the pseudo three dimensional images, as moving images. Note that in the case that the specified point or the corresponding point are input, the labels are displayed by tracking the rotation. The method for tracking rotation disclosed in Japanese Patent Application No. 2008-145402 may be applied. In addition, it is possible for the input section 4 (a mouse, for example) to control the rotation.

Note that in the case that input of a specified point is received via the input section 4 as described above, the pseudo three dimensional medical image may be displayed as a rotating moving image, along with the corresponding point.

In addition, if the input section 4 receives input of a specified point outside of the subject region of a medical image (CT image) displayed by the display section 6, or the calculating section 5 calculates a corresponding point outside the subject region of a CT image, a display command to display an error message by the display section 6 may be issued.

Next, emphasized display of the medical images (axial images) will be described as a second embodiment of the operation of the display section 6.

According to the second embodiment, the image processing apparatus 10 is capable of displaying an image M, in which the specific region is emphasized, and a marker (text, for example) that indicates the projection direction of an intensity projection method within a pseudo three dimensional medical image (coronal image) are displayed together.

The display section 6 may be set to switch the display of the image M as well as the display of the text or the like that indicates the projection direction ON and OFF by commands input via the input section 4. In addition, in the case that a plurality of pseudo three dimensional medical images (coronal images) are displayed by the display section 6, a marker that indicates the projection direction of a single pseudo three dimensional medical image (a single coronal image) which is specified by a command input via the input section 4 may be displayed. Only the outline of the subject region which is present toward another side may be emphasized and displayed, instead of the image M. In addition, the image M may be semitransparent, in order to enable viewing of the subject region prior to combined display. Note that the image processing apparatus 10 may be configured such that the degree of transparency of the image M is adjustable by a user via the input section 4.

For example, the display section 6 may display the specific region between an inner circle C5 and an outer circle C4 within an image I5 illustrated in Figure 6 as the image M. As described above, it is also possible to designate a mask region as the specific region, and to display the specific region as the image M.

As described above, the embodiment of the present invention executes the intensity projection method in a radial manner outward from the center line toward the surface of the subject's body. Thereby, a planar exploded pseudo three dimensional medical image is generated, and the generated pseudo three dimensional medical is displayed. Thereby, a pseudo three dimensional image that facilitates diagnosis of bone regions while enabling understanding of the positions of the bone regions within the subject as a whole can be generated and displayed.

In addition, a configuration is adopted, wherein specified points are input within medical images which are displayed by the display section 6, the positions of corresponding points within pseudo three dimensional medical images that correspond to the specified points within the medical images are calculated, and markers that indicate the calculated corresponding points are displayed along with the pseudo three dimensional medical images. In this case, positions within the pseudo three dimensional medical images that correspond to the specified points within the medical images can be easily understood. Particularly, which bone within a pseudo three dimensional medical image corresponds to a bone specified by a specified point within a medical image can be easily understood.

Further, a configuration is adopted, wherein specified points are input within pseudo three dimensional medical images which are displayed by the display section 6, the positions of corresponding points within medical images that correspond to the specified points within the medical images are calculated, and markers that indicate the calculated corresponding points are displayed along with the medical images. In this case, positions within the medical images that correspond to the specified points within the pseudo three dimensional medical images can be easily understood. Particularly, the position within a medical image that a diseased portion specified by a specified point within a pseudo three dimensional medical image is present at can be easily understood.

## Claims

1. An image processing apparatus for displaying a pseudo three dimensional medical image, which is generated by executing an intensity projection method based on a plurality of medical images, which are obtained in advance, that represent transverse cross sections of a subject and include the surface of the body of the subject, **characterized by** comprising:
a center line calculating section (2), for calculating a center line that connects the approximate center points of subject regions within the plurality of medical images;
a pseudo three dimensional medical image generating section (3), for generating a planar exploded pseudo three dimensional medical image by executing an intensity projection method in a radial manner from the center line toward the surface of the subject' s body; and
a display section (6) for displaying the generated pseudo three dimensional medical image.

2. An image processing apparatus as defined in Claim 1, further comprising:
a specific region specifying section (7), for specifying a specific region in each of the subject regions from points within the subject regions that intersect the center line; and wherein:
the pseudo three dimensional medical image generating section (3) executes the intensity projection method only with respect to the specific region.

3. An image processing apparatus as defined in Claim 2, wherein:
the specific region is a region in which the thoracic bones of the subject are not pictured.

4. An image processing apparatus as defined in Claim 1, further comprising:
a desired region specifying section, for specifying desired regions within the subject regions; and wherein:
the pseudo three dimensional medical image generating section executes the intensity projection method only with respect to the desired regions.

5. An image processing apparatus as defined in any one of Claims 1 through 4, wherein:
the pseudo three dimensional medical image generating section executes the intensity projection method employing the MIP method.

6. An image processing apparatus as defined in any one of Claims 1 through 4, wherein:
the pseudo three dimensional medical image generating section executes the intensity projection method employing the RAYSUM method.

7. An image processing apparatus as defined in any one of Claims 1 through 6, further comprising:
an input section (4), for inputting specified points within the medical images; and
a calculating section (5), for calculating points within the pseudo three dimensional medical image corresponding to the specified points input by the input section (4) within the medical images; and wherein:
the display section (6) displays the medical images, the pseudo three dimensional medical image, and markers that indicate the calculated corresponding points within the pseudo three dimensional medical image along with the pseudo three dimensional medical image.

8. An image processing apparatus as defined in any one of Claims 1 through 6, further comprising:
an input section (4), for inputting specified points within the displayed pseudo three dimensional medical images; and
a calculating section (5), for calculating points within the medical images corresponding to the specified points input by the input section (4) within the pseudo three dimensional medical image; and wherein:
the display section (6) displays the medical images, the pseudo three dimensional medical image, and markers that indicate the corresponding points within the medical images along with the medical images.

9. An image processing apparatus as defined in any one of Claims 1 through 8, wherein:
the display section displays an image that indicates the region which is being projected by the intensity projection method and a marker that indicates the projection direction of the intensity projection method, along with the medical images.

10. An image processing method for displaying a pseudo three dimensional medical image, which is generated by executing an intensity projection method based on a plurality of medical images, which are obtained in advance, that represent transverse cross sections of a subject and include the surface of the body of the subject, **characterized by** comprising the steps of:
calculating a center line that connects the approximate center points of subject regions within the plurality of medical images;
generating a planar exploded pseudo three dimensional medical image by executing an intensity projection method in a radial manner from the center line toward the surface of the subject's body; and
displaying the generated pseudo three dimensional medical image.

11. A computer readable medium having recorded therein an image processing program for displaying a pseudo three dimensional medical image, which is generated by executing an intensity projection method based on a plurality of medical images, which are obtained in advance, that represent transverse cross sections of a subject and include the surface of the body of the subject, **characterized by** the image processing program causing a computer to execute the procedures of:
calculating a center line that connects the approximate center points of subject regions within the plurality of medical images;
generating a planar exploded pseudo three dimensional medical image by executing an intensity projection method in a radial manner from the center line toward the surface of the subject's body; and
displaying the generated pseudo three dimensional medical image.
